# FASCICULE DE BREVET EUROPEEN

(11) **EP 1 810 492 B1**
(45) Date de publication et mention de la délivrance du brevet: **03.01.2018**
(21) Numéro de dépôt: 05819238.6
(22) Date de dépôt: 03.11.2005
(51) Int. Cl.: H04M 3/53

(54) **SERVICE DE MESSAGERIE DANS UN RESEAU DE TELECOMMUNICATIONS DE TYPE "PAIR A PAIR"**
NACHRICHTENÜBERTRAGUNG ÜBER EIN PEER-TO-PEER TELEKOMMUNIKATIONSNETZWERK
MESSAGING SERVICE IN A PAIR TO PAIR TYPE TELECOMMUNICATIONS NETWORK

(30) Priorité: 08.11.2004 FR 0411860
(43) Date de publication de la demande: 25.07.2007
(73) Titulaire: Orange, 75015 Paris (FR)
(72) Inventeur: BABAGBETO, Patrick, F-22560 TREBEURDEN (FR); NEVEUX, Didier, F-22140 CAVAN (FR); DEBEAU, Eric, F-22300 LANNION (FR)
(74) Mandataire: Delumeau, François Guy
(86) Numéro de dépôt international: PCT/FR2005/050924
(87) Numéro de publication internationale: WO 2006/051232

(56) Documents cités:
- EP-A- 0 760 573
- FR-A- 2 838 011
- US-A1- 2004 064 512
- JULIEN REYNIER: "Projet: ce que vous devez savoir avant de fabriquer un réseau de partage Peer to Peer"[Online] 7 juin 2004 (2004-06-07), XP002368861 INTERNET Extrait de l'Internet: URL:http://www.di.ens.fr/~jreynier/Recherc he/Projet%20P2P.pdf> [extrait le 2006-02-20]
- BRAM COHEM: "Incentives Build Robustness in BitTorrent" INET. ANNUAL INTERNET SOCIETY CONFERENCE, XX, XX, 22 mai 2003 (2003-05-22), pages 1-5, XP002334200 cité dans la demande

## Description

### Arrière-plan de l'invention

La présente invention se rapporte à un service de messagerie dans un réseau de télécommunications de type « pair à pair » (en anglais « peer to peer »).

Plus précisément, ce service permet à un déposant connecté au réseau de pairs de déposer un message destiné à un destinataire, lui aussi susceptible de se connecter à ce réseau.

L'invention peut notamment être utilisée pour des messages vocaux ou visiophoniques.

Plus généralement, un message peut être constitué par un fichier informatique quelconque.

Dans le domaine des messages vocaux ou visiophoniques, il existe à ce jour principalement deux solutions pour déposer un message à un destinataire, en cas d'occupation ou de non-réponse du terminal de ce dernier.

On connaît tout d'abord les répondeurs visiophoniques classiques attachés au terminal du destinataire.

L'inconvénient majeur de cette première solution vient du fait que l'utilisateur de ce service doit acquérir un équipement (répondeur) pour la réception de ses messages.

Cette solution ne peut faire l'objet d'un service d'un opérateur du réseau de télécommunications.

On connaît aussi un service disponible auprès des opérateurs de télécommunications permettant à l'appelant de déposer un message sur une plate-forme de messagerie gérée par cet opérateur.

L'inconvénient majeur de cette deuxième solution réside dans le fait que la plate-forme de messagerie est un point centralisé de l'architecture du réseau de télécommunications.

De façon évidente, cette centralisation rend la solution technique peu robuste en cas d'attaques ou de disfonctionnements. Le document FR 2 838 011 A divulgue un procédé de notification de la présence d'un au plusieurs messages dans une boîte de messagerie dans un réseau mobile.

### Objet et résumé de l'invention

L'invention, reposant sur un réseau de télécommunications d'architecture pair à pair, permet de résoudre les inconvénients précités.

Dans une telle architecture, chaque terminal, identifié de manière unique, forme un pair du réseau, les terminaux pouvant à la fois fonctionner en serveur ou en client.

Plus précisément et selon un premier aspect, l'invention vise un procédé de dépôt, par un déposant, d'un message destiné à un destinataire dans un réseau de pairs, ce procédé comportant les étapes suivantes :
- enregistrement du message dans au moins un pair dépositaire ;
- envoi, par le pair dépositaire, d'un message de notification de l'enregistrement du message, à au moins un super pair du pair du déposant ; et
- envoi, par le super pair du pair du déposant, d'un avis de réception du message, à destination d'un pair du destinataire, l'avis indiquant le pair dépositaire ayant enregistré le message.

Dans un mode de réalisation, le message est enregistré en une pluralité de parties dans une pluralité de pairs dépositaires. La pluralité de pairs dépositaires envoie des messages respectifs de notification d'enregistrement de la partie qu'ils ont enregistrée au super pair du pair du déposant. Le super pair du déposant envoie un avis de réception du message à destination d'un pair du destinataire, cet avis comportant la liste des pairs dépositaires ainsi que les identifiants respectifs des parties du message enregistrées par les pairs dépositaires.

Dans un mode de réalisation de l'invention, toutes les parties d'un même message ont le même identifiant.

Ainsi, l'invention utilise avantageusement la capacité des espaces de stockage des pairs du réseau, en pratique illimitée, éliminant ainsi les coûts d'infrastructure pour l'opérateur (maintenance, calcul, stockage). Dans le cas particulier où les pairs sont constitués par des ordinateurs, les messages ou parties de message sont en pratique mémorisés dans les disques durs de ces ordinateurs.

L'invention présente aussi l'avantage de ne pas nécessiter l'acquisition d'un répondeur dédié, les pairs étant en pratique constitués par des ordinateurs personnels connectés au réseau pour d'autres fins (accès Internet, notamment).

On notera d'ores et déjà que, contrairement au système de partage d'informations connu sur les réseaux de pairs (et notamment KAZAA), le procédé de dépôt de message selon l'invention comporte une étape d'envoi d'un message de notification par le pair dépositaire à un super pair du pair du déposant.

On notera aussi qu'il ne s'agit pas d'un partage de message à proprement parler, le message déposé par le déposant étant destiné à un destinataire particulier.

Conformément à l'invention, le message peut être enregistré en entier sur un ou plusieurs pairs dépositaires.

Il peut aussi être enregistré en parties sur plusieurs pairs dépositaires.

L'homme du métier comprendra aisément que cette fragmentation permet notamment d'augmenter la vitesse de téléchargement de ce message.

Il peut aussi être enregistré en entier sur un pair dépositaire et en parties sur plusieurs pairs dépositaires.

Le fait de pouvoir enregistrer un message sur plusieurs pairs dépositaires, permet avantageusement d'assurer une continuation du service, même si l'un de ces pairs dépositaires est inactif.

Dans un mode de réalisation, le pair du déposant est un pair dépositaire pour l'intégralité du message.

Ce mode de réalisation permet avantageusement l'enregistrement du message, même si le système pair du déposant est temporairement déconnecté du réseau de pairs.

Dans un mode de réalisation, le procédé de dépôt selon l'invention comporte, préalablement à l'étape d'envoi, une étape de détection du pair du destinataire.

L'homme du métier comprendra que cette étape de détection est mise en oeuvre lorsque le pair du destinataire n'est pas connecté au réseau de pairs.

Cette étape de détection peut être mise en oeuvre par le pair du déposant ou par au moins l'un de ses supers pairs.

Dans un mode de réalisation, le pair du déposant ou au moins un super pair du pair du déposant élit au moins l'un des pairs dépositaire.

Ainsi, dans ce mode de réalisation, les pairs dépositaires élus fonctionnent en réplication du pair du déposant, étant dit que dans le contexte de l'invention, cette « réplication » désigne une copie supplémentaire du message dans son intégralité ou en partie(s).

Ainsi, et de façon concrète, certains pairs dépositaires peuvent n'héberger que des parties de message.

Dans un mode de réalisation, le procédé de dépôt comporte une étape préliminaire d'invitation à déposer le message, cette invitation étant séquencée par un super pair du pair du déposant. Ce mode de réalisation est particulièrement avantageux, lorsque certains systèmes pairs du réseau (par exemple des terminaux dédiés à la visiophonie) ne possèdent pas la capacité de traitement suffisante pour héberger la logique de séquencement des messages.

En variante, l'invitation à déposer le message est séquencée par le pair du déposant.

Bien entendu, l'homme du métier comprendra que cette étape d'invitation est mise en oeuvre lorsque le pair du destinataire est occupé ou plus généralement inaccessible.

Selon un mode de réalisation, le super pair du pair du déposant envoie un message de réception du message à un terminal du destinataire non relié au réseau de pairs.

Ce terminal peut notamment être un téléphone portable et le message de confirmation constitué par un SMS.

Ainsi, le destinataire du message pourra être informé de la réception d'un message même s'il n'est pas à proximité de son pair.

Dans un mode de réalisation, le procédé comporte une étape de suppression des messages ou parties de messages enregistrés par les pairs dépositaires après une durée prédéterminée.

Cette étape permet de ne pas surcharger la mémoire des pairs dépositaires avec des messages trop anciens.

L'invention vise aussi un procédé d'obtention d'un message enregistré, au profit d'un destinataire de ce message dans un réseau de pairs.

Ce procédé comporte les étapes suivantes :
- réception, par un pair du destinataire, d'un avis de réception du message en provenance d'au moins un super pair d'un pair du déposant du message, l'avis indiquant au moins un pair dépositaire ayant enregistré le message ;
- obtention du message par le pair du destinataire auprès du pair dépositaire ; et
- restitution du message par le pair du destinataire.

Dans un mode de réalisation, l'avis précité comporte une liste d'une pluralité de pairs dépositaires ayant enregistré tout ou partie du message ainsi que des identifiants respectifs de ces parties de message. L'étape d'obtention de message consiste alors à obtenir le message entièrement ou par parties auprès de ces pairs dépositaires.

Dans un mode de réalisation, le procédé d'obtention selon l'invention comporte une étape d'envoi par le pair du destinataire d'un acquittement de réception de l'avis précité à destination d'au moins un super pair du pair du déposant.

Corrélativement, l'invention vise aussi :
- un support d'informations lisible par un système informatique, éventuellement totalement ou partiellement amovible, notamment CD-ROM ou support magnétique, tel un disque dur ou une disquette, ou support transmissible, tel un signal électrique ou optique, et comportant des instructions d'un programme d'ordinateur permettant la mise en oeuvre d'un procédé d'obtention d'un message tel que mentionné ci-dessus ; et
- un programme d'ordinateur stocké sur un support d'informations, ledit programme comportant des instructions permettant la mise en oeuvre d'un procédé d'obtention d'un message tel que mentionné ci-dessus, lorsque ce programme est chargé et exécuté par un système informatique.

On rappelle ici, que dans un mode de réalisation de l'invention, toutes les parties d'un même message ont le même identifiant.

Ainsi, sur réception de l'avis de réception précité, le pair du destinataire peut reconstituer le message envoyé par le déposant, à partir des différentes parties de message obtenues auprès des pairs dépositaires.

Bien entendu, si le message est mémorisé dans son intégralité dans un pair dépositaire, le pair du destinataire peut lire directement ce message depuis ce pair dépositaire. Le message pourra aussi être stocké sur le pair du destinataire, simultanément à sa lecture.

Avantageusement, le pair du destinataire acquitte la réception des avis de réception, de sorte que les super pairs du pair du déposant n'ont pas besoin de ré-émettre cet avis.

Conformément à l'invention, il est donc indispensable de connaître l'identifiant du message ou les identifiants des parties de message pour l'obtenir à partir des pairs dépositaires. Ceci permet de s'assurer que le message ne peut être lu par un pair mal intentionné.

Dans un mode de réalisation, l'obtention met en oeuvre le principe de Hording. Ce principe connu ne sera pas décrit ici. Pour toute information, l'homme du métier pourra notamment se reporter au document suivant : « Incentives Build Robustness in Bit Torrent » par Bram Cohem, May 22 2003.

L'invention vise également un système de messagerie dans un réseau pair à pair, ce système comportant :
- au moins un pair dépositaire pour enregistrer un message destiné à un destinataire,
- au moins un super pair du pair du déposant de ce message,
- et un pair d'un destinataire du message.

Le pair dépositaire est agencé pour envoyer un message de notification d'enregistrement du message au super pair du pair du déposant. Le super pair du pair du déposant est adapté pour envoyer un avis de réception du message à destination du pair du destinataire de ce message, cet avis indiquant le pair dépositaire ayant enregistré le message.

Dans un mode de réalisation, le système de messagerie selon l'invention comprend une pluralité de pairs dépositaires agencés pour enregistrer respectivement une pluralité de parties du message destiné au destinataire et pour envoyer des messages respectifs de notification d'enregistrement de la partie de message enregistrée au super pair du pair du déposant. L'avis de réception du message envoyé par le super pair du pair du déposant à destination d'un pair du destinataire de ce message comporte une liste des pairs dépositaires ayant enregistré des parties de message et des identifiants respectifs des parties de message enregistrées par les pairs dépositaires.

Dans un mode de réalisation du système de messagerie selon l'invention, le super pair du pair de déposant est adapté à envoyer un message de confirmation de l'enregistrement du message à un terminal du destinataire non relié au réseau de pairs.

Les avantages particuliers du procédé d'obtention, du support d'informations, du programme d'ordinateur et du système de messagerie étant identiques à ceux du procédé de dépôt mentionné précédemment, ils ne seront pas rappelés ici.

### Brève description des dessins

D'autres aspects et avantages de la présente invention apparaîtront plus clairement à la lecture de la description de modes particuliers de réalisation qui va suivre, cette description étant donnée uniquement à titre d'exemple non limitatif et faite en référence aux dessins annexés sur lesquels :
- la figure 1 représente un réseau de télécommunications et un système de messagerie conforme à l'invention dans un mode de réalisation ;
- la figure 2 représente les principales étapes d'un procédé de dépôt conforme à l'invention dans un mode de réalisation ;
- la figure 3 représente des échanges de données de contrôle au sein du réseau de la figure 1 ; et
- la figure 4 représente les principales étapes d'un procédé d'obtention conforme à l'invention dans un mode de réalisation.

### Description détaillée d'un mode de réalisation

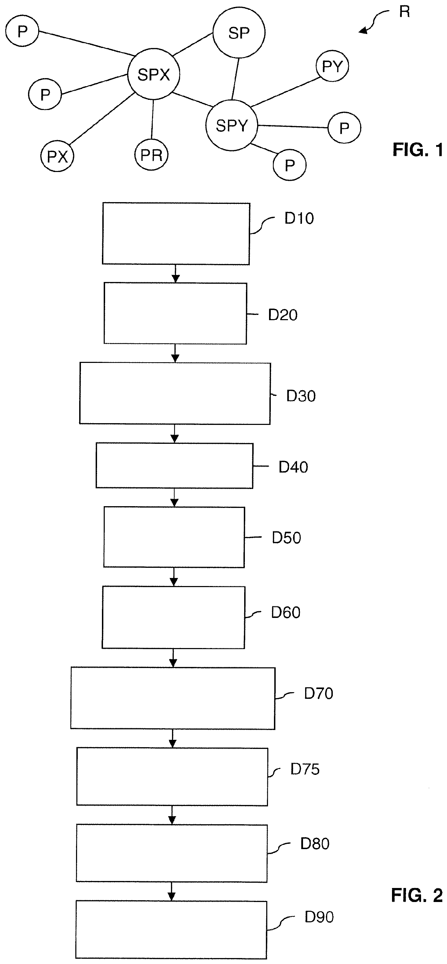

La figure 1 représente un réseau R de télécommunications pour la mise en oeuvre d'un service de messagerie, conforme à la présente invention.

Ce réseau de télécommunications est un réseau pair à pair de type hybride.

De façon connue, la topologie hybride permet de réduire la taille du réseau de pairs, tout en minimisant les recherches d'informations et le trafic au sein de ce réseau.

Dans un tel réseau à topologie hybride, on utilise des supers pairs SP, à savoir des pairs P choisis, par exemple, pour leur puissance de calcul et leur bande passante, ces supers pairs étant notamment en charge de certaines fonctions au sein du réseau, comme l'indexation des informations et un rôle intermédiaire dans le transport des requêtes.

De façon connue, les supers pairs communiquent entre eux de façon décentralisée, les requêtes de recherche étant masquées aux pairs.

Les pairs du réseau communiquent, quant à eux, de façon centralisée.

Dans un tel réseau, chaque pair peut potentiellement devenir un super pair et garder les fonctionnalités propres au fonctionnement d'un pair traditionnel.

Le processus de connexion au réseau de pairs étant connu de l'homme du métier, il ne serait pas décrit ici.

Pour plus de renseignements, l'homme du métier pourra se reporter à au site suivant : http://www.grouter.net/gnutella/search.htm.

Dans la suite de la description, on supposera donc que les connexions des pairs avec leurs supers pairs sont établies et que les systèmes pairs sont donc raccordés à la communauté de messagerie pour déposer ou écouter des messages.

On notera par la suite :
- P, un système pair ;
- PX, le pair du déposant X ;
- PY, le pair du destinataire Y ;
- SPX, le super pair du pair PX du déposant X ;
- SPY, le super pair du pair PY du destinataire Y ; et
- PR, un pair de réplication élu par le super pair SPX du pair PX du déposant X.

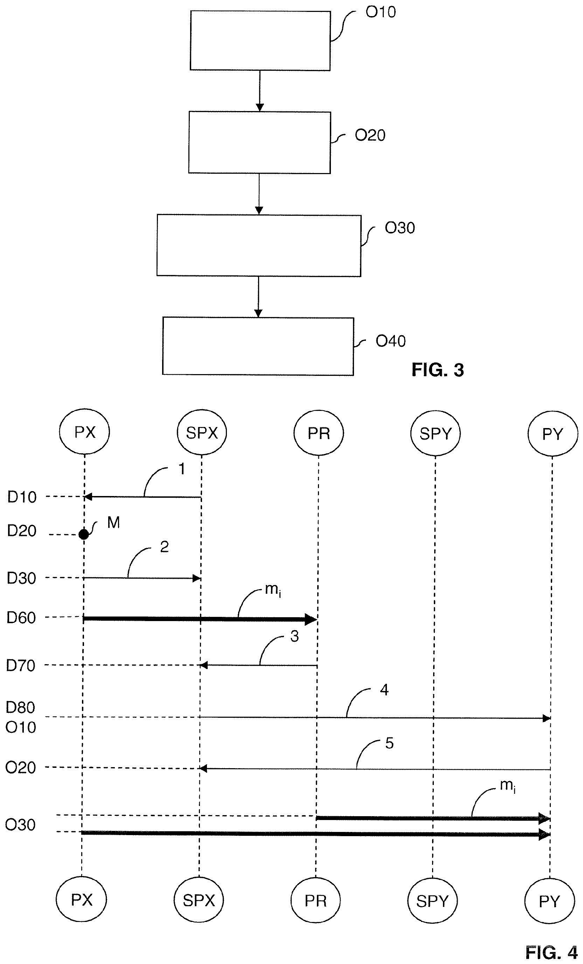

En référence maintenant aux figures 2 et 4, nous allons décrire un procédé de dépôt d'un message conforme à l'invention dans un mode de réalisation.

On se place ici dans le cas où un déposant X, utilisateur d'un pair PX souhaite déposer un message à destination d'un destinataire Y, utilisateur d'un pair PY.

Ce dépôt de message peut notamment être mis en oeuvre lorsque le déposant X, souhaitant communiquer avec le destinataire Y, reçoit une information selon laquelle le système pair PY du destinataire Y est occupé, ou plus généralement inaccessible (tonalité d'occupation, par exemple).

Dans ce cas, le pair PX du déposant X notifie son super pair SPX qu'il souhaite déposer un message pour le destinataire Y afin que celui-ci séquence la procédure de dépôt de message. Bien entendu cette notification n'est pas nécessaire dans le cas de la variante dans laquelle l'invitation à déposer le message est séquencée par le pair PX lui-même.

Dans ce cas, le super pair SPX du pair PX du déposant X, séquence, au cours d'une étape préliminaire D10 un message 1 d'invitation à déposer un message M, le jeu d'annonce proprement dit, étant intégré au logiciel du pair PX du déposant X.

Ce séquencement, connu en lui-même de l'homme du métier, permet notamment au déposant X de ré-écouter, valider, supprimer, recommencer ou compléter son message.

Cette étape préliminaire d'invitation D10 est suivie par une étape D20, au cours de laquelle le déposant X enregistre le message M, dans son intégralité, dans son pair PX.

Cette étape D20 d'enregistrement local est suivie par une étape D30, au cours de laquelle le pair PX du déposant X envoie un message 2 de notification de la fin de l'enregistrement du message M à son super pair SPX.

Dans le mode de réalisation décrit ici, le super pair SPX élit, au cours d'une étape D40, d'autres pairs dépositaires PR utilisés en réplication du pair PX du déposant X, pour le stockage du message M.

Cette étape D40 d'élection étant connue de l'homme du métier, elle ne sera pas décrite ici.

Dans le mode de réalisation décrit ici, cette étape D40 d'élection est suivie par une étape D50 du morcellement du message M en parties de message mi, ce morcellement étant effectué par le pair PX du déposant X. Bien entendu cette étape D50 de morcellement est facultative et ne s'impose pas lorsque le message est de petite taille. L'homme du métier comprendra que l'étape D50 de morcellement peut aussi être effectuée en parallèle de l'étape D40 d'élection.

Cette étape D50 de morcellement est suivie par une étape D60, au cours de laquelle le pair PX du déposant X enregistre une ou plusieurs parties mi du message M (ou l'intégralité du message M) dans les pairs dépositaires PR élus à l'étape D40. Cet enregistrement est piloté par le super pair SPX du pair PX du déposant X.

Cette étape D60 d'enregistrement est suivie par une étape D70, au cours de laquelle chacun des pairs dépositaires PR, élu au cours de l'étape d'élection D40, et ayant enregistré au moins une partie mi du message M, envoie un message 3 de notification au super pair SPX du pair PX du déposant X.

Sur réception de ces messages 3 de notification, le super pair SPX du pair PX du déposant X envoie, au cours d'une étape D80, à destination du pair PY du destinataire Y, un avis de réception 4, cet avis 4 comportant la liste des pairs dépositaires PX, PR et un identifiant de chacune des parties mi du message M enregistrée par chacun des pairs dépositaires, étant rappelé que toutes ces parties mi peuvent avoir le même identifiant.

Si aucun pair PY du destinataire Y n'est connecté au réseau de pair, cette étape D80 d'envoi est précédée d'une étape D75 de détection de présence d'un pair PY du destinataire Y sur le réseau de pairs, Cette étape D75 de détection, connue en soi, peut par exemple être mise en oeuvre par l'un des supers pairs SPX du pair PX du déposant X.

Cette étape D75 de détection est suivie de l'étape D80 d'envoi précédemment décrite.

Dans le mode de réalisation décrit ici, l'avis de réception 4 comporte notamment l'identifiant du pair PX du déposant X, lequel contient l'intégralité du message M, conformément à ce qui a été décrit précédemment en référence à l'étape D20.

Dans le mode de réalisation décrit ici, l'étape D80 d'envoi de l'avis 4 est suivie par une étape D90, au cours de laquelle le super pair SPX du pair PX du déposant X envoie un message de réception du message M à un terminal T du destinataire Y, ce terminal T n'étant pas relié au réseau de pairs.

Cette étape D90 de notification peut notamment être mise en oeuvre en utilisant le protocole SMS pour l'envoi du message d'avis de réception sur un téléphone portable du destinataire Y.

On pourra, pour ce faire, envisager un modèle de communication centralisé, l'opérateur ayant préférentiellement le contrôle de cette fonctionnalité.

Nous allons maintenant décrire, en référence aux figures 3 et 4, un procédé d'obtention du message M enregistré sur le réseau de pairs au profit du destinataire Y.

Comme décrit précédemment, le pair PY du destinataire Y a reçu, au cours d'une étape O10, symétrique de l'étape d'envoi D80, l'avis 4 de réception du message M en provenance du super pair SPX du pair PX du déposant X.

Comme décrit précédemment, cet avis 4 comporte la liste des pairs dépositaires PX, PR de toute ou partie du message M et un identifiant du message M ou de chacune des parties de ce message enregistré par chacun des pairs dépositaires.

On rappelle que, dans le mode de réalisation décrit en référence aux figures 2 et 4, le pair PX du déposant X était l'un des pairs dépositaires pour l'intégralité du message M.

Consécutivement à l'étape O10 de réception de l'avis 4, le procédé d'obtention comporte une étape 020 d'envoi, par le pair PY du destinataire Y, d'un acquittement 5 de réception de cet avis 4, cet acquittement étant émis à destination du super pair SPX du pair PX du déposant X.

Cette étape 020 d'envoi d'un acquittement permet d'éviter que le super pair SPX du pair PX du déposant X ne ré-émette l'avis 4 à destination du pair PY du déposant Y.

L'étape 020 d'envoi de cet acquittement 5 est suivie par une étape 030, au cours de laquelle le pair PY obtient le message M, entièrement ou par parties mi, auprès des dépositaires PX, PR.

Dans le mode de réalisation décrit ici, ce message est obtenu en mettant en oeuvre le principe de Hording.

Le message M est ensuite restitué au destinataire Y par son pair PY au cours d'une étape 040 de restitution.

Dans le mode de réalisation décrit ici, une fois le message restitué, le pair PY du destinataire envoie au super pair SPX du pair PX du déposant X, un avis de fin de message.

Ce super pair SPX ordonne alors la suppression du message sur le pair déposant PX et diffuse un message à tous les pairs dépositaires PR leur demandant de supprimer les parties mi du message M.

En tout état de cause, dans le mode de réalisation décrit ici, chaque pair dépositaire PX, PR est adapté à mettre en oeuvre une suppression du message M ou de toute partie mi du message M après une durée prédéterminée TTL.

## Revendications

1. Procédé de dépôt, par un déposant (X), d'un message (M) destiné à un destinataire (Y), dans un réseau d'architecture pair à pair, les pairs dudit réseau pouvant à la fois fonctionner en serveur ou en client, ledit procédé comportant les étapes suivantes :
- enregistrement (D20, D60) du message (M), dans au moins un pair dépositaire PX, PR) ;
- envoi (D30, D70), par le au moins un pair dépositaire (PX, PR), d'un message (2,3) de notification de l'enregistrement du message (M), à au moins un super pair (SPX) du pair (PX) dudit déposant (X) ;
- envoi (D80), par le super pair (SPX), d'un avis (4) de réception du message (M), à destination d'un pair (PY) du destinataire (Y), l'avis indiquant le au moins un pair dépositaire PX, PR) ayant enregistré le message (M).

2. Procédé de dépôt selon la revendication 1, dans lequel
- le message est enregistré en une pluralité de parties (mi) dans une pluralité de pairs dépositaires (PX, PR),
- la pluralité de pairs dépositaires envoient des messages respectifs de notification d'enregistrement de la partie (mi) qu'ils ont enregistrée au super pair (SPX) du pair (X) du déposant, et
- le super pair (SPX) envoie un avis de réception du message (M) à destination d'un pair (PY) du destinataire (Y), ledit avis comportant la liste des pairs dépositaires (PX, PR) ainsi que des identifiants respectifs des parties (mi) du message (M) enregistrées par les pairs dépositaires (PR).

3. Procédé de dépôt selon la revendication 1 ou 2, **caractérisé en ce qu'**il comporte une étape préliminaire (D10) d'invitation à déposer ledit message (M), ladite invitation (1) étant séquencée par le pair (PX) du déposant (X) ou par l'un desdits supers pairs (SPX).

4. Procédé de dépôt selon l'une quelconque des revendications 1 à 3, **caractérisé en ce qu'**il comporte une étape (D90) d'envoi, par ledit super pair (SPX), d'un message de réception dudit message (M), à un terminal (T) dudit destinataire (Y), non relié audit réseau de pairs.

5. Procédé de dépôt selon l'une quelconque des revendications 1 à 4, **caractérisé en ce qu'**il comporte, au sein dudit pair dépositaire (PX, PR) une étape de suppression de ladite partie (M, mi) de message, après une durée prédéterminée (TTL).

6. Procédé d'obtention d'un message enregistré (M) au profit d'un destinataire (Y) dans un réseau d'architecture pair à pair, les pairs dudit réseau pouvant à la fois fonctionner en serveur ou en client, ledit procédé comportant les étapes suivantes :
- réception (O10), par un pair (PY) du destinataire (Y) d'un avis (4) de réception du message (M) en provenance d'au moins un super pair
(SPX) d'un pair (PX) du déposant (X) du message, ledit avis indiquant au moins un pair dépositaire PX, PR) ayant enregistré le message (M),
- obtention (030) du message par le pair (PY) du destinataire (Y) auprès du au moins un pair dépositaire PX, PR); et
- restitution (O40) du message par le pair (PY) du destinataire (Y).

7. Procédé d'obtention selon la revendication 6, dans lequel ledit avis comporte une liste d'une pluralité de pairs dépositaires (PX, PR) ayant enregistré tout ou partie (M, mi) du message ainsi que des identifiants respectifs desdites parties de message (mi), **caractérisé en ce que** l'étape d'obtention du message (O30) consiste à obtenir le message (M) entièrement ou par parties auprès des pairs dépositaires (PX, PR).

8. Procédé selon la revendication 6 ou 7, dans lequel il est prévu une étape d'envoi (O20) par le pair (PY) du destinataire (Y) d'un acquittement (5) de réception de l'avis (4) à destination d'au moins un super pair (SPX) du pair (PX) du déposant (X).

9. Procédé d'obtention selon l'une quelconque des revendications 6 à 8, **caractérisé en ce que** ladite étape d'obtention (030) met en oeuvre le principe de Hording.

10. Système de messagerie dans un réseau d'architecture pair à pair (5), les pairs dudit réseau pouvant à la fois fonctionner en serveur ou en client, ledit système de messagerie comportant :
- au moins un pair dépositaire (PX, PR) pour enregistrer un message (M) destiné à un destinataire (Y), et
- au moins un super pair (SPX) du pair (PX) du déposant (X) dudit message (M),
- un pair (PY) d'un destinataire (Y) du message (M), le au moins un pair dépositaire (PX, PR) étant agencé pour envoyer un message (2, 3) de notification d'enregistrement du message (M, mi) au super pair (SPX) du pair (PX) du déposant (X) et le super pair (SPX) étant adapté pour envoyer un avis (4) de réception du message (M) à destination du pair (PY) du destinataire (Y) de ce message, ledit avis indiquant le au moins un pair dépositaire (PX, PR) ayant enregistré le message (M, mi).

11. Système de messagerie selon la revendication 10, comprenant une pluralité de pairs dépositaires (PX, PR) agencés pour enregistrer respectivement une pluralité de parties (mi) du message (M) destiné au destinataire (Y) et pour envoyer des messages respectifs (2, 3) de notification d'enregistrement de la partie de message enregistrée (M, mi) au super pair (SPX) du pair (PX) du déposant (X), l'avis (4) de réception du message (M) envoyé par le super pair (SPX) à destination d'un pair (PY) du destinataire (Y) de ce message comportant une liste des pairs dépositaires (PX, PR) ayant enregistré des parties de message (M, mi) et des identifiants respectifs des parties (mi) du message (M) enregistrées par les pairs dépositaires (PX, PR).

12. Système de messagerie selon la revendication 10 ou 11, **caractérisé en ce que** le super pair (SPX) du pair (PX) du déposant (X) est adapté à envoyer un message de confirmation de l'enregistrement dudit message (M) à un terminal (T) dudit destinataire (Y) non relié au réseau de pairs (R).

13. Support d'informations lisible par un système informatique, **caractérisé en ce qu'**il comporte des instructions d'un programme d'ordinateur permettant la mise en oeuvre d'un procédé d'obtention d'un message selon l'une quelconque des revendications 6 à 9, lorsque ce programme est chargé et exécuté par un système informatique.

14. Programme d'ordinateur stocké sur un support d'informations, ledit programme comportant des instructions permettant la mise en oeuvre d'un procédé d'obtention d'un message selon l'une quelconque des revendications 6 à 9, lorsque ce programme est chargé et exécuté par un système informatique.

15. Super pair (SPX) pour un réseau d'architecture pair à pair, les pairs dudit réseau pouvant à la fois fonctionner en serveur ou en client, ledit super pair (SPX) étant **caractérisé en ce qu'**il comprend :
- des moyens de réception pour recevoir au moins une notification (2,3) d'enregistrement d'un message (M) en provenance d'au moins un pair dépositaire (PX, PR) du réseau, et
- des moyens pour envoyer un avis (4) de réception du message (M) à destination d'un pair (PY) du destinataire (Y) de ce message, ledit avis indiquant le au moins un pair dépositaire (PX, PR) ayant enregistré le message (M, mi).

16. Super pair selon la revendication 15, dans lequel les moyens de réception sont agencés pour recevoir une pluralité de notifications d'enregistrement de parties respectives du message (M) et les moyens pour envoyer un avis (4) de réception du message (M) à destination d'un pair (PY) du destinataire (Y) de ce message (M) sont agencés pour insérer dans l'avis une liste des pairs dépositaires (PX, PR) ayant enregistré les parties de message (M, mi) et des identifiants respectifs des parties (mi) du message (M) enregistrées par les pairs dépositaires (PX, PR).

## Patentansprüche

1. Verfahren zum Hinterlassen einer für einen Empfänger (Y) bestimmten Nachricht (M) durch einen Hinterlassenden (X) in einem Netzwerk mit Peer-to-Peer-Architektur, wobei die Peers des Netzwerks gleichzeitig als Server oder als Client arbeiten können, wobei das Verfahren die folgenden Schritte umfasst:
- Aufzeichnen (D20, D60) der Nachricht (M) in mindestens einem Hinterlassungs-Peer (PX, PR);
- Senden (D30, D70) einer Nachricht (2,3) zur Benachrichtigung über die Aufzeichnung der Nachricht (M) durch den mindestens einen Hinterlassungs-Peer (PX, PR) an den mindestens einen Super-Peer (SPX) des Peers (PX) des Hinterlassenden (X);
- Senden (D80) einer Mitteilung (4) über den Empfang der Nachricht (M) durch den Super-Peer (SPX) an einen Peer (PY) des Empfängers (Y), wobei die Mitteilung den mindestens einen Hinterlassungs-Peer (PX, PR) angibt, der die Nachricht (M) aufgezeichnet hat.

2. Hinterlassungsverfahren nach Anspruch 1, wobei
- die Nachricht in einer Vielzahl von Teilen (mi) in einer Vielzahl von Hinterlassungs-Peers (PX, PR) aufgezeichnet wird,
- die Vielzahl von Hinterlassungs-Peers jeweils Nachrichten zur Benachrichtigung über die Aufzeichnung des Teils (mi), den sie aufgezeichnet haben, an den Super-Peer (SPX) des Peers (X) des Hinterlassenden senden, und
- der Super-Peer (SPX) eine Mitteilung über den Empfang der Nachricht (M) an einen Peer (PY) des Empfängers (Y) sendet, wobei die Mitteilung die Liste der Hinterlassungs-Peers (PX, PR) sowie jeweilige Kennungen der Teile (mi) der Nachricht (M), die von den Hinterlassungs-Peers (PR) aufgezeichnet wurden, umfasst.

3. Hinterlassungsverfahren nach Anspruch 1 oder 2, **dadurch gekennzeichnet, dass** es einen vorausgehenden Schritt (D10) der Aufforderung (1) zum Hinterlassen der Nachricht (M) umfasst, wobei die Aufforderung von dem Peer (PX) des Hinterlassenden (X) oder von einem der Super-Peers (SPX) sequenziert wird.

4. Hinterlassungsverfahren nach einem der Ansprüche 1 bis 3, **dadurch gekennzeichnet, dass** es einen Schritt (D90) des Sendens einer Nachricht über den Empfang der Nachricht (M) durch den Super-Peer (SPX) an ein Endgerät (T) des Empfängers (Y), das nicht mit dem Peer-Netzwerk verbunden ist, umfasst.

5. Hinterlassungsverfahren nach einem der Ansprüche 1 bis 4, **dadurch gekennzeichnet, dass** es innerhalb des Hinterlassungs-Peers (PX, PR) einen Schritt des Löschens des Teils (M, mi) der Nachricht nach einer vorgegebenen Zeitdauer (TTL) umfasst.

6. Verfahren zum Erhalten einer zugunsten eines Empfängers (Y) aufgezeichneten Nachricht (M) in einem Netzwerk mit Peer-to-Peer-Architektur, wobei die Peers des Netzwerks gleichzeitig als Server oder als Client arbeiten können, wobei das Verfahren die folgenden Schritte umfasst:
- Empfangen (O10) einer Mitteilung (4) über den Empfang der Nachricht (M), die von dem mindestens einen Super-Peer (SPX) eines Peers (PX) des die Nachricht Hinterlassenden (X) kommt, durch einen Peer (PY) des Empfängers (Y), wobei die Mitteilung mindestens einen Hinterlassungs-Peer (PX, PR), der die Nachricht (M) aufgezeichnet hat, angibt,
- Erhalten (O30) der Nachricht durch den Peer (PY) des Empfängers (Y) bei dem mindestens einen Hinterlassungs-Peer (PX, PR) und
- Wiedergabe (O40) der Nachricht durch den Peer (PY) des Empfängers (Y).

7. Verfahren zum Erhalten nach Anspruch 6, wobei die Mitteilung eine Liste mit einer Vielzahl von Hinterlassungs-Peers (PX, PR), die die gesamte oder einen Teil (M, mi) der Nachricht aufgezeichnet haben, sowie jeweiligen Kennungen der Nachrichtenteile (mi) umfasst, **dadurch gekennzeichnet, dass** der Schritt des Erhaltens der Nachricht (O30) darin besteht, die Nachricht (M) vollständig oder in Teilen bei Hinterlassungs-Peers (PX, PR) zu erhalten.

8. Verfahren nach Anspruch 6 oder 7, wobei ein Schritt des Sendens (O20) einer Quittung (5) für den Empfang der Mitteilung (4) durch den Peer (PY) des Empfängers (Y) an mindestens einen Super-Peer (SPX) des Peers (PX) des Hinterlassenden (X) vorgesehen ist.

9. Verfahren zum Erhalten nach einem der Ansprüche 6 bis 8, **dadurch gekennzeichnet, dass** der Schritt des Erhaltens (O30) das Hording-Prinzip einsetzt.

10. Nachrichtensystem in einem Netzwerk mit Peer-to-Peer-Architektur (5), wobei die Peers des Netzwerks gleichzeitig als Server oder als Client arbeiten können, wobei das Nachrichtensystem umfasst:
- mindestens einen Hinterlassungs-Peer (PX, PR) zum Aufzeichnen einer für einen Empfänger (Y) bestimmten Nachricht (M) und
- mindestens einen Super-Peer (SPX) des Peers (PX) des die Nachricht (M) Hinterlassenden (X),
- einen Peer (PY) eines Empfängers (Y) der Nachricht (M), wobei der mindestens eine Hinterlassungs-Peer (PX, PR) so gestaltet ist, dass er eine Nachricht (2, 3) zur Benachrichtigung über die Aufzeichnung der Nachricht (M, mi) an den Super-Peer (SPX) des Peers (PX) des Hinterlassenden (X) sendet, und der Super-Peer (SPX) geeignet ist, eine Mitteilung (4) über den Empfang der Nachricht (M) an den Peer (PY) des Empfängers (Y) dieser Nachricht zu senden, wobei die Mitteilung den mindestens einen Hinterlassungs-Peer (PX, PR) angibt, der die Nachricht (M, mi) aufgezeichnet hat.

11. Nachrichtensystem nach Anspruch 10, umfassend eine Vielzahl von Hinterlassungs-Peers (PX, PR), die so gestaltet sind, dass sie eine Vielzahl von Teilen (mi) der für den Empfänger (Y) bestimmten Nachricht (M) aufzeichnen und jeweilige Nachrichten (2, 3) zur Benachrichtigung über die Aufzeichnung des aufgezeichneten Nachrichtenteils (M, mi) an den Super-Peer (SPX) des Peers (PX) des Hinterlassenden (X) senden, wobei die Mitteilung (4) über den Empfang der Nachricht (M), die vom Super-Peer (SPX) an einen Peer (PY) des Empfängers (Y) dieser Nachricht gesendet wird, eine Liste der Hinterlassungs-Peers (PX, PR) umfasst, die Nachrichtenteile (M, mi) aufgezeichnet haben, und jeweilige Kennungen der Teile (mi) der Nachricht (M), die von den Hinterlassungs-Peers (PX, PR) aufgezeichnet wurden.

12. Nachrichtensystem nach Anspruch 10 oder 11, **dadurch gekennzeichnet, dass** der Super-Peer (SPX) des Peers (PX) des Hinterlassenden (X) geeignet ist, eine Nachricht zur Bestätigung der Aufzeichnung der Nachricht (M) an ein Endgerät (T) des Empfängers (Y) zu senden, das nicht mit dem Peer-Netzwerk (R) verbunden ist.

13. Speichermedium, das von einem Datenverarbeitungssystem gelesen werden kann, **dadurch gekennzeichnet, dass** es Anweisungen eines Computerprogramms umfasst, die das Durchführen eines Verfahrens zum Erhalten einer Nachricht nach einem der Ansprüche 6 bis 9 ermöglichen, wenn dieses Programm von einem Datenverarbeitungssystem geladen und ausgeführt wird.

14. Computerprogramm, das auf einem Speichermedium gespeichert ist, wobei das Programm Anweisungen umfasst, die das Durchführen eines Verfahrens zum Erhalten einer Nachricht nach einem der Ansprüche 6 bis 9 ermöglichen, wenn dieses Programm von einem Datenverarbeitungssystem geladen und ausgeführt wird.

15. Super-Peer (SPX) für ein Netzwerk mit Peer-to-Peer-Architektur, wobei die Peers des Netzwerks gleichzeitig als Server oder als Client arbeiten können, wobei der Super-Peer (SPX) **dadurch gekennzeichnet ist, dass** er umfasst:
- Empfangsmittel zum Empfangen mindestens einer Benachrichtigung (2,3) über die Aufzeichnung einer Nachricht (M), die von mindestens einem Hinterlassungs-Peer (PX, PR) des Netzwerks kommt, und
- Mittel zum Senden einer Mitteilung (4) über den Empfang der Nachricht (M) an einen Peer (PY) des Empfängers (Y) dieser Nachricht, wobei die Mitteilung den mindestens einen Hinterlassungs-Peer (PX, PR) angibt, der die Nachricht (M, mi) aufgezeichnet hat.

16. Super-Peer nach Anspruch 15, wobei die Empfangsmittel so gestaltet sind, dass sie eine Vielzahl von Benachrichtigungen über die Aufzeichnung von jeweiligen Teilen der Nachricht (M) empfangen, und die Mittel zum Senden einer Mitteilung (4) über den Empfang der Nachricht (M) an einen Peer (PY) des Empfängers (Y) dieser Nachricht (M) so gestaltet sind, dass sie in die Mitteilung eine Liste der Hinterlassungs-Peers (PX, PR), die die Nachrichtenteile (M, mi) aufgezeichnet haben, und jeweilige Kennungen der Teile (mi) der Nachricht (M), die von den Hinterlassungs-Peers (PX, PR) aufgezeichnet wurden, einfügen.

## Claims

1. Method for the depositing by a depositor (X) of a message (M) intended for an addressee (Y) in a network having a peer-to-peer architecture, the peers of said network being able to operate both as a server and as a client, said method comprising the following steps:
- recording (D20, D60) of the message (M), in at least one depositary peer (PX, PR);
- dispatch (D30, D70) by the at least one depositary peer (PX, PR) of a message (2, 3) notifying the recording of the message (M) to at least one super-peer (SPX) of the peer (PX) of said depositor (X);
- dispatch (D80) by the super-peer (SPX) of a notice (4) of reception of the message (M) to a peer (PY) of the addressee (Y), the notice indicating the at least one depositary peer (PX, PR) having recorded the message (M).

2. Depositing method according to Claim 1, in which:
- the message is recorded in a plurality of parts (mi) in a plurality of depositary peers (PX, PR),
- the plurality of depositary peers send respective messages notifying the recording of the part (mi) that they have recorded to the super-peer (SPX) of the peer (X) of the depositor, and
- the super-peer (SPX) sends a notice of reception of the message (M) to a peer (PY) of the addressee (Y), said notice comprising the list of the depositary peers (PX, PR) and of the respective identifiers of the parts (mi) of the message (M) recorded by the depositary peers (PR).

3. Depositing method according to Claim 1 or 2, **characterized in that** it comprises a preliminary step (D10) of invitation to deposit said message (M), said invitation (1) being sequenced by the peer (PX) of the depositor (X) or by one of said super-peers (SPX).

4. Depositing method according to any one of Claims 1 to 3, **characterized in that** it comprises a step (D90) of dispatch by said super-peer (SPX) of a message indicating the reception of said message (M) to a terminal (T) of said addressee (Y) not connected to said peer-to-peer network.

5. Depositing method according to any one of Claims 1 to 4, **characterized in that** it comprises, within said depositary pair (PX, PR), a step of deletion of said message part (M, mi) after a predetermined duration (TTL).

6. Method for obtaining a message (M) recorded for the addressee (Y) in a network having a peer-to-peer architecture, the peers of said network being able to operate both as a server and as a client, said method comprising the following steps:
- reception (O10) by a peer (PY) of the addressee (Y) of a notice (4) of reception of the message (M) originating from at least one super-peer (SPX) of a peer (PX) of the depositor (X) of the message, said notice indicating at least one depositary peer (PX, PR) having recorded message (M),
- obtaining (O30) of the message by the peer (PY) of the addressee (Y) from at least one depositary peer (PX, PR); and
- retrieval (O40) of the message by the peer (PY) of the addressee (Y).

7. Obtaining method according to Claim 6, in which said notice comprises a list of a plurality of depositary peers (PX, PR) having recorded all or part (M, mi) of the message and of the respective identifiers of said message parts (mi), **characterized in that** the step of obtaining the message (O30) consists in obtaining the message (M) entirely or in parts from the depositary peers (PX, PR).

8. Method according to Claim 6 or 7, in which a step is provided for dispatch (O20) by the peer (PY) of the addressee (Y) of an acknowledgement (5) of reception of the notice (4) to at least one super-peer (SPX) of the peer (PX) of the depositor (X).

9. Obtaining method according to any one of Claims 6 to 8, **characterized in that** said obtaining step (O30) applies the Hording principle.

10. Messaging system in a peer-to-peer network (5), the peers of said network being able to operate both as a server and as a client, said messaging system comprising:
- at least one depositary peer (PX, PR) for recording a message (M) intended for an addressee (Y); and
- at least one super-peer (SPX) of the peer (PX) of the depositor (X) of said message (M);
- a peer (PY) of an addressee (Y) of the message (M); the at least one depositary peer (PX, PR) being configured to send a message (2, 3) notifying the recording of the message (M, mi) to the super-peer (SPX) of the peer (PX) of the depositor (X) and the super-peer (SPX) being suitable for sending a notice (4) of reception of the message (M) to the peer (PY) of the addressee (Y) of this message, said notice indicating the at least one depositary peer (PX, PR) having recorded the message (M, mi).

11. Messaging system according to Claim 10, including a plurality of depositary peers (PX, PR) configured to record respectively a plurality of parts (mi) of the message (M) intended for the addressee (Y) and to send respective messages (2, 3) notifying the recording of the recorded message part (M, mi) to the super-peer (SPX) of the peer (PX) of the depositor (X), the notice (4) of reception of the message (M) sent by the super-peer (SPX) to a peer (PY) of the addressee (Y) of this message comprising a list of the depositary peers (PX, PR) that have recorded message parts (M, mi) and of the respective identifiers of the parts (mi) of the message (M) recorded by the depositary peers (PX, PR).

12. Messaging system according to Claim 10, **characterized in that** the super-peer (SPX) of the peer (PX) of the depositor (X) is configured to send a message confirming the recording of said message (M) to a terminal (T) of said addressee (Y) not connected to the peer-to-peer network (R).

13. Information medium readable by data processing system, **characterized in that** it includes instructions of a computer program for carrying out a method for obtaining a message according to any one of Claims 6 to 9 when this program is loaded onto and executed by a data processing system.

14. Computer program stored on an information medium, said program comprising instructions for carrying out a method for obtaining a message according to any one of Claims 6 to 9 when this program is loaded onto and executed by a data processing system.

15. Super-peer (SPX) for a network having a peer-to-peer architecture, the peers of said network being able to operate both as a server and as a client, said super-peer (SPX) being **characterized in that** it includes:
- receiving means for receiving at least one notice (2, 3) of recording of a message (M) originating from at least one depositary peer (PX, PR) of the network, and
- means for sending a notice (4) of reception of the message (M) to a peer (PY) of the addressee (Y) of this message, said notice indicating the at least one depositary peer (PX, PR) having recorded the message (M, mi).

16. Super-peer according to Claim 15, in which the reception means are configured to receive a plurality of notices of recording of respective parts of the message (M) and the means for sending a notice (4) of reception of the message (M) to a peer (PY) of the addressee (Y) of this message (M) are configured to insert into the notice a list of the depositary peers (PX, PR) having recorded the message parts (M, mi) and of the respective identifiers of the parts (mi) of the message (M) recorded by the depositary peers (PX, PR).
